# EUROPEAN PATENT APPLICATION

(11) **EP 3 273 656 A1**
(43) Date of publication of application: **24.01.2018**
(21) Application number: 16764554.8
(22) Date of filing: 02.02.2016
(51) Int. Cl.: H04L 29/06, B60R 16/023

(54) **COMMUNICATIONS SYSTEM**

(30) Priority: 16.03.2015 JP 2015052581
(71) Applicant: Calsonic Kansei Corporation, Saitama-shi Saitama 331-8501 (JP); Mazda Motor Corporation, Aki-gun Hiroshima 730-8670 (JP)
(72) Inventor: KASHIWASE, Kouji, Saitama-shi Saitama 331-8501 (JP); KOBAYASHI, Masatoshi, Saitama-shi Saitama 331-8501 (JP); MICHIHIRA, Osamu, Aki-gun Hiroshima 730-8670 (JP); OKADA, Kenji, Aki-gun Hiroshima 730-8670 (JP); SHIMIZU, Masaaki, Aki-gun Hiroshima 730-8670 (JP); TOKUMARU, Yuichiro, Aki-gun Hiroshima 730-8670 (JP)
(74) Representative: Louis Pöhlau Lohrentz
(86) International application number: PCT/JP2016/053044
(87) International publication number: WO 2016/147723

(57) **Abstract**

Plural types of data having different additional information is transmitted and received without standardizing the communication format. A communication system includes a plurality of controllers (4), (5) capable of transmitting and receiving plural types of data (3) which requires different additional information (2). Each of the controllers (4), (5) includes an additional information control table (6) for specifying the additional information (2) required for each type of the data (3) and an additional information processing part (7) configured to execute a process of the additional information (2) to the data (3) which requires the additional information (2) with reference to the additional information control table (6). The additional information processing part (7) is configured to add the additional information (2) to the data (3) which requires the additional information (2) when the data is transmitted, and to recognize the additional information (2) added to the data (3) which requires the additional information (2) when the data is received.

## Description

### TECHNICAL FIELD

This invention relates to a communication system.

### BACKGROUND ART

Various electrical components and many controllers for controlling these electrical components are provided in a vehicle such as an automobile. A communication channel connecting the many controllers is provided to construct a communication system capable of transmitting and receiving data (*see,* Patent Literature 1, for example).

In such a communication system, communication formats of data to be transmitted and received are usually standardized.

### CITATION LIST

### Patent Literature

Patent Literature 1: JP2014-34373A

### SUMMARY

### Technical Problem

However, when the communication formats of the data to be transmitted and received are standardized, it is necessary to add additional information to data which requires no additional information such as attribute information. It becomes necessary to execute a process of adding additional information to all data. For this reason, a longer process time is required, and communication load is increased due to increase in data size.

It is therefore, a major object of the present disclosure is to solve the above problems.

### Solution to Problem

To solve the above problems, the present disclosure provides a communication system including a plurality of controllers capable of transmitting and receiving plural types of data which requires different additional information. Each of the controllers includes an additional information control table for specifying the additional information required for each type of the data and an additional information processing part configured to execute a process of the additional information to the data which requires the additional information with reference to the additional information control table. The additional information processing part is configured to add the additional information to the data which requires the additional information when the data is transmitted, and to recognize the additional information added to the data which requires the additional information when the data is received.

### Advantageous Effects

According to the present invention, plural types of data having different additional information can be transmitted or received without standardizing communication formats.

### BRIEF DESCRIPTION OF DRAWINGS

[Fig. 1] Fig. 1 is a configuration diagram of a communication system according to an embodiment.
[Fig. 2] Fig. 2 is a configuration diagram illustrating data in which communication formats are not standardized.
[Fig. 3] Fig. 3 is a flowchart illustrating an operation in transmitting.
[Fig. 4] Fig. 4 is a flowchart illustrating an operation in receiving.
[Fig. 5] Fig. 5 is a configuration diagram illustrating data in which communication formats are standardized.

### DESCRIPTION OF EMBODIMENT

Various electrical components and many controllers for controlling these electrical components are provided in a vehicle such as an automobile. A communication channel connecting the many controllers is provided to construct a communication system of capable of transmitting and receiving data.

An example of a communication system with multiplex communication such as CAN communication which has been widely used for an automobile is described in the following embodiment. However, the communication system can be used for communication methods except the multiplex communication and next-generation communication methods such as Ethernet⁽™⁾, CAN-FD, and FlexRay, in addition to the CAN communication.

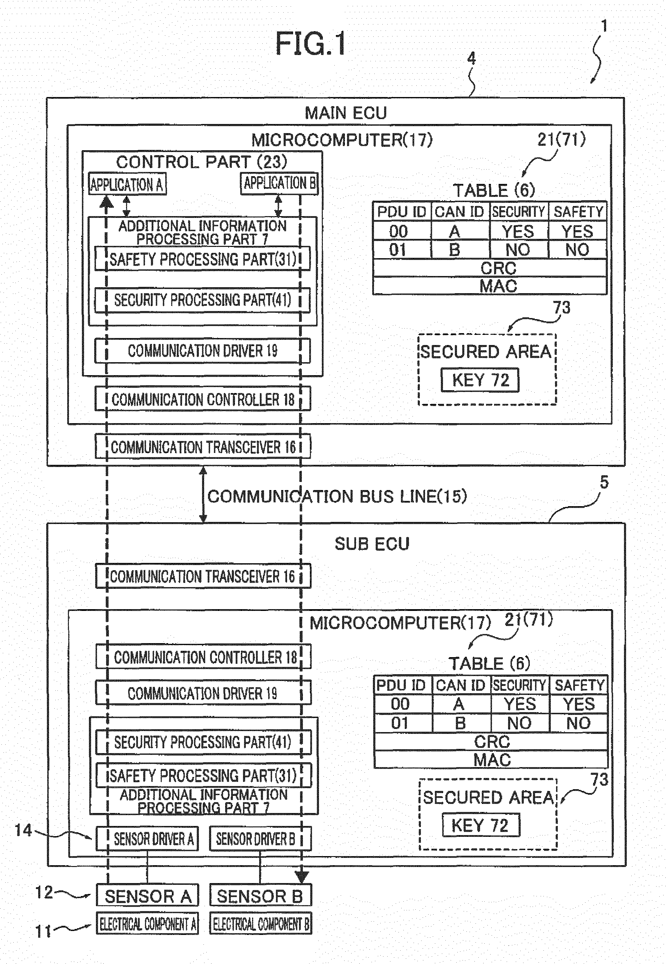

Hereinafter, the embodiment of the present invention is described with reference to the drawings. Figs. 1 to 5 are views describing the embodiment.

### First Embodiment

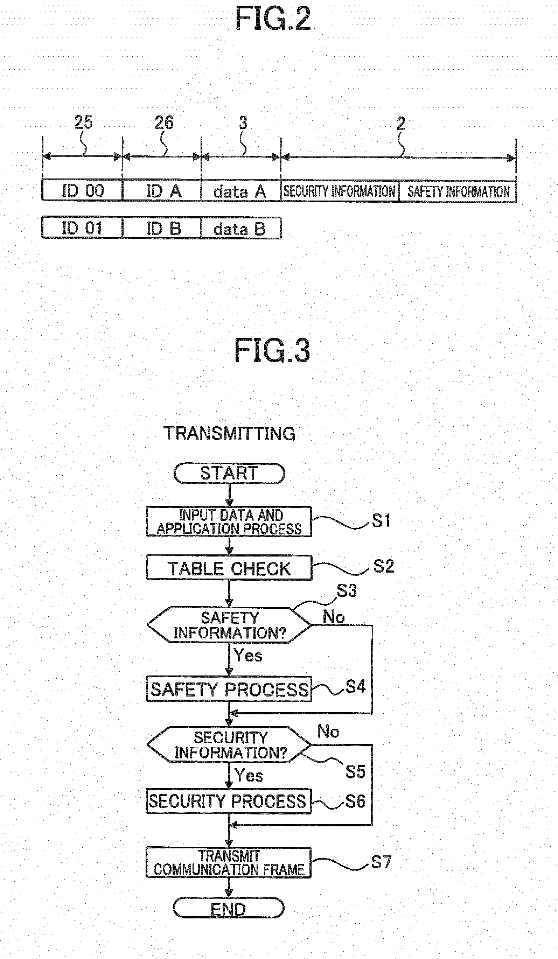

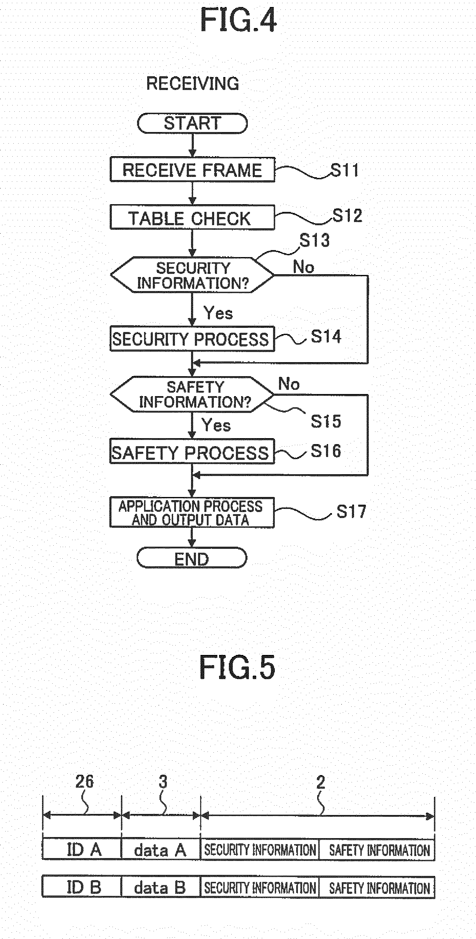

Hereinafter, the configuration of the embodiment is described.
(1) As illustrated in Fig. 1, a communication system 1 of the embodiment includes a plurality of controllers 4, 5 capable of transmitting and receiving plural types of data 3 (refer to Fig. 2) having different required additional information 2. Each controller 4, 5 includes additional information control table 6 (table) for specifying the required additional information 2 for each type of the data 3 and an additional information processing part 7 configured to execute a process of the additional information 2 to the data 3 which requires the additional information 2. The additional information processing part 7 is configured to add the additional information 2 to the data 3 which requires the additional information 2 in transmitting by a process shown in the flowchart of Fig. 3 and recognize the additional information 2 added to the data 3 which requires the additional information 2 in receiving by a process shown in the flowchart of Fig. 4.

In this case, the additional information 2 is, for example, attribute information to be added to the data 3 (data A, B).

The data 3 is detection data detected by a detector 12 (sensors A, B) attached to an auxiliary device 11 (electrical components A, B) of an automobile. The data 3 is also control data obtained by calculation of the controller 4. The detection data is input to the controller 5 with a driver 14 for a sensor (sensor drivers A, B).

The controllers 4, 5 include a main ECU and a sub ECU, respectively. The controllers 4, 5 are connected in parallel relative to a common communication channel 15 (communication bus line). Each of the controllers 4, 5 includes an IC dedicated for communication such as a communication transceiver 16 and a microcomputer chip 17 (microcomputer).

A communication controller 18 that converts signals from the communication transceiver 16 into digital signals is provided in the microcomputer chip 17. The communication controller 18 is controlled by a communication driver 19. The communication driver 19 is configured as software or hardware.

The additional information control table 6 is stored in a memory 21 provided in the microcomputer chip 17. The additional information processing part 7 is configured as software or hardware in the microcomputer chip 17. In the controller 4 (main ECU), the microcomputer chip 17 is provided with an arithmetic control part 23 (control part, for example, applications A, B) that executes a calculation process for controlling each of the accessory devices 11 based on the data 3 detected by the detector 12.

The additional information processing part 7 operates between the communication driver 19 and the arithmetic control part 23.

A is applied to a configuration related to the data 3 which requires the additional information 2 while B is applied to a configuration related to the data 3 which requires no additional information 2, so as to easily distinguish existence or non-existence of the additional information 2 or the necessity of the additional information 2.

(2) In the additional information control table 6, an identification code 25 (for example, PDU ID) with no dependence on a communication method is assigned for each type of the data 3. The additional information processing part 7 is configured to execute a process of the additional information 2 to the data 3 based on the identification code 25.

In this case, the identification code 25 with no dependence on a communication method is, for example, 00 and 01. In addition, an identification code 26 (CAN ID) (for example, ID A and ID B) with dependence on a communication method is usually assigned to the data 3. The data 3 is usually treated in the controllers 4, 5 based on the identification code 26.

(3) The additional information 2 is safety information (operation safety information).

In this case, the safety information is processed by a safety processing part 31 provided in the additional information processing part 7. The safety information is, for example, a parameter for detecting contents of data and accuracy of order of data. The safety information is added to the data 3 regarding, for example, a wiper, a lamp, a wheel speed in an automobile.

(4) The additional information 2 is security information.

In this case, the security information is processed by a security processing part 41 provided in the additional information processing part 7. The security information is a parameter for detecting falsification of the data 3. The security information is added to the data 3 regarding, for example, a door block and a starring column lock in an automobile.

In addition, the additional information 2 includes a time stamp, a counter for synchronizing data, a data length, and a data position in addition to the safety information and the security information.

(5) A function of authenticating accuracy is added to the additional information control table 6.

In this case, the function of authenticating accuracy is, for example, chucksum and CRC (Cyclic Redundancy Check). The function of authenticating accuracy is similar to the safety information of the data 3.

(6) A function of authenticating rewriting is added to the additional information control table 6.

In this case, the function of authenticating rewriting is, for example, MAC (Message Authentication Code). The function of authenticating rewriting is similar to the security information of the data 3.

(7) The additional information control table 6 is disposed in a general operation region 71 of the controllers 4, 5. A key 72 (common key) for use in the authentication of the rewriting is put in a region 73 different from the general operation region 71.

In this case, the general operation region 71 is secured in, for example, the memory 21. The region 73 (secured region) may be secured as a region different from the general operation region 71 in the memory 21 or as a region dedicated for a part of the microcomputer chip 17 except the memory 21.

Hereinafter, the operation of the embodiment is described. The flow of the data 3 is described. The data 3 detected by the detector 12 is input to the controller 5 (sub ECU), and is transmitted to the controller 4 (main ECU) through the communication channel 15 (communication bus line) from the controller 5. In the controller 4 which has received the data 3, the arithmetic control part 23 executes a predetermined calculation process to obtain the control data 3. This data 3 is transmitted to the controller 5 from the controller 4 through the communication channel 15 (communication bus line), and is used to control the auxiliary device 11.

In the above, for example, for transmitting the data 3 of the detector 12 as a predetermined communication frame, as illustrated in Fig. 3, when the data 3 from the detector 12 is input to the controller 5 (sub ECU) (Step S1), the additional information processing part 7 executes table check (Step S2). In addition, the reading and the writing of the additional information control table 6 such as the table check may be periodically or non-periodically executed.

In Step S2, for example, the MAC and the CRC of the additional information control table 6 are firstly checked. Then, the PDU ID is added to the data 3.

As a result of the table check, in Step S3, when the data 3 is data (for example, data A = PDU ID 00) which requires the safety information as the additional information 2 (in the case of YES), the safety processing part 31 of the additional information processing part 7 adds the safety information to the data 3 (Step S4). When the data 3 is data (for example, data B = PDU ID 01) which requires no safety information (in the case of NO), the safety processing part 31 adds no safety information to the data 3 (to Step S5).

Next, in Step S5, when the data 3 is data (data A = PDU ID 00) which requires the security information as the additional information 2 (in the case of YES), the security processing part 41 of the additional information processing part 7 adds the security information to the data 3 (Step S6). When the data 3 is data (data B = PDU ID 01) which requires no security information (in the case of NO), the security processing part 41 adds no safety information to the data 3 (to Step S7).

The security process may be executed before the safety process. Moreover, when the data 3 requires the additional information 2 except the safety information and the security information, a process of adding the additional information 2 may be executed similar to the above processes.

Finally, in Step S7, the data 3 (communication frame) is transmitted to the controller 4. The PDU ID may be deleted or may not be deleted when the data 3 is transmitted to the controller 4.

As illustrated in Fig. 5, when the controller 4 (main ECU) receives the data 3 (data with predetermined communication frame) (Step S11), the additional information processing part 7 executes the table check (Step S12). In addition, the reading and writing of the additional information control table 6 such as the table check may be periodically or non-periodically executed.

In Step S12, for example, the MAC and the CRC of the additional information control table 6 are checked. Then, the PDU ID is added to the data 3 when required.

As a result of the table check, in Step S 13, when the data 3 is data (data A = PDU ID 00) which requires the safety information as the security information 2 (in the case of YES), the safety processing part 31 of the additional information processing part 7 checks the safety information of the data 3 (Step S14). When the data 3 is data (data B = PDU ID 01) which requires no safety information (in the case of NO), the safety processing part 31 does not check the safety information of the data 3 (to Step S15).

Next, in Step S15, when the data 3 is data (data A = PDU ID 00) which requires the security information as the additional information 2 (in the case of YES), the security processing part 41 of the additional information processing part 7 checks the security information of the data 3 (Step S16). When the data 3 is data (data B = PDU ID 01) which requires no security information (in the case of NO), the security processing part 41 does not check the safety information of the data 3 (to Step S17).

The security process may be executed before the safety process. Moreover, when the data 3 requires the additional information 2 except the safety information and the security information, a process of adding the additional information 2 may be executed similar to the above processes.

Finally, in Step S 17, the control data is generated by processing the data 3 with the arithmetic control part 23.

Similarly, for example, when the control data obtained by the arithmetic control part 23 is sent as a predetermined communication frame, the controller 4 (main ECU) sends the data 3 to the controller 5 (sub ECU) similar to Fig. 3.

The controller 5 which has received the data 3 from the controller 4 outputs the data 3 to the auxiliary device 11 to control the accessory device 11, similar to Fig. 4.

The following effects can be achieved according to the present embodiment.
(1) A plurality of controllers 4, 5 transmits and receives plural types of the data 3 which requires different additional information 2. In this case, each of the controllers 4, 5 includes the additional information control table 6 and the additional information processing part 7. The data 3 which requires the additional information 2 can be thereby distinguished from the data 3 which requires no additional information 2 in each of the controllers 4, 5. The additional information 2 is not added to the data 3 which requires no additional information 2, or the additional information 2 is added to the data 3 which requires the additional information 2. Therefore, the plural types of the data 3 which requires different additional information 2 can be transmitted and received without standardizing the communication format (for additional information 2), as illustrated in Fig. 5.

Accordingly, it becomes unnecessary to add the additional information 2 to the data 3 which requires no additional information 2 for standardizing a communication format. Thus, the processing time can be shortened by omitting the process of adding the additional information 2.

As the additional information 2 is not added to the data 3 which requires no additional information 2, the size of the data 3 is decreased. The communication load can be therefore reduced.

Each of the controllers 4, 5 includes the additional information control table 6 for specifying the additional information 2 required for each type of the data 3. The necessity of the additional information 2 and the type of the additional information 2 to be added can be confirmed relative to all data only with reference to the additional information control table 6. The additional information 2 to the data 3 can be easily changed by changing the additional information control table 6 with no influence on the additional information processing part 7.

The additional information 2 can be added to the data 3 which requires the additional information 2 with reference to the additional information control table 6 when the data 3 is transmitted. The additional information 2 which is actually added to the data 3 which requires the additional information 2 can be recognized when the data 3 is received.

The content of the data 3 thereby matches the content of the additional information control table 6 for each of the data 3 when the data 3 is transmitted. The content of the received data 3 is recognized with reference to the additional information control table 6. Each of the controllers 4, 5 therefore appropriately treats the data 3 even when the communication formats for the data 3 are not standardized.
(2) In the additional information control table 6, the dedicated identification code 25 (for example, PDU ID) with no dependence on the communication method is assigned to each type of the data 3. The additional information processing part 7 executes the process of the additional information 2 to the data 3 based on the dedicated identification code 25. With this, it becomes unnecessary to use, for the process of the additional information 2, the identification code 25 (for example, communication ID) specific to a communication method. The process of the additional information 2 to the data 3 can be executed separately from a communication method. Accordingly, the above process of the additional information 2 can be widely used for communication methods except the multiplex communication and various communication methods, for example, CAN communication and next-generation communication methods such as Ethernet⁽™⁾, CAN-FD, and FlexRay, in addition to the CAN communication.
(3) The additional information 2 is the safety information (information such as checksum or CRC for securing accuracy of data). The accurate data 3 can be thereby obtained.
(4) The additional information 2 is the security information (information such as MAC for detecting illegal rewriting (falsification) from external). The safe data 3 can be thereby obtained.
(5) The function of authenticating accuracy (similar to safety information of data 3, for example, checksum and CRC) is added to the additional information control table 6. The accuracy (content and order) of the additional information control table 6 can be thereby maintained.
(6) The function of authenticating rewriting (similar to security information of data 3, for example, MAC) is added to the additional information control table 6. The rewriting (falsification) of the additional information control table 6 can be thereby detected. Therefore, the security of the additional information control table 6 can be improved.
(7) The additional information control table 6 and the key 72 are put in different regions (general operation region 71 and region 73), respectively. Accordingly, the additional information control table 6 and the key 72 cannot be obtained at the same time from the same region (general operation region 71). For this reason, the security of the additional information control table 6 can be further improved.

While the embodiment has been described in detail with reference to the drawings, the embodiment is only illustrative and exemplary of the invention. Accordingly, the invention is not limited to the configurations of the embodiment. It will be appreciated that any design change and the like that do not depart from the gist should be included in the invention. It is to be understood that, when multiple configurations are incorporated in each of the embodiment, for example, possible combinations of these configurations are included in the invention without any particular description. It should further be understood that, when multiple embodiments and modifications are disclosed as those of the invention, any possible combinations of configurations among these embodiments and modifications are considered to be included in the invention without any particular description. Moreover, configurations disclosed in the drawings are naturally considered to be included in the invention without any particular description. Further, the term "and/or the like (such as)" is used to indicate that any equivalent is also included. Also, when such a term as "substantially", "about", or "approximately" is used, this means that a value or the like within a range or accuracy which is reasonably acceptable is also included.

### DESCRIPTION OF REFERENCE SIGN

- 1: communication system
- 2: additional information
- 3: data
- 4: controller
- 5: controller
- 6: additional information control table
- 7: additional information processing part
- 25: identification code
- 71: general operation region
- 72: key

### CROSS-REFERENCE TO RELATED APPLICATION

The present application is based on and claims priority to Japanese Patent Application No. 2015-052581, filed on March 16, 2015, the disclosure of which is hereby incorporated by reference in its entirety.

## Claims

1. A communication system comprising:
a plurality of controllers capable of transmitting and receiving plural types of data which requires different additional information, each of the controllers including an additional information control table for specifying the additional information required for each type of the data and an additional information processing part configured to execute a process of the additional information to the data which requires the additional information with reference to the additional information control table, wherein
the additional information processing part is configured to add the additional information to the data which requires the additional information when the data is transmitted, and to recognize the additional information added to the data which requires the additional information when the data is received.

2. The communication system according to claim 1,
wherein in the additional information control table, an identification code with no dependence on a communication method is assigned to each type of the data, and
wherein the additional information processing part is configured to execute a process of the additional information to the data based on the identification code.

3. The communication system according to claim 1, wherein the additional information is safety information.

4. The communication system according to claim 1, wherein the additional information is security information.

5. The communication system according to claim 1, wherein a function of authenticating accuracy is added to the additional information control table.

6. The communication system according to claim 1, wherein a function of authenticating rewriting is added to the additional information control table.

7. The communication system according to claim 6, wherein the additional information control table is put in a general operation region of the controller, and a key for use in the authentication of the rewriting is put in a region different from the general operation region.
